Europäisches Patentamt

European Patent Office

Office européen des brevets

(19)

(11) Publication number: 0 311 415
A2

# EUROPEAN PATENT APPLICATION

(12)

(21) Application number: 88309361.9

(22) Date of filing: 07.10.88

(51) Int. Cl.4: B 60 B 11/06

(30) Priority: 09.10.87 US 107482

(43) Date of publication of application:
12.04.89 Bulletin 89/15

(84) Designated Contracting States: DE ES FR IT

(71) Applicant: Lin, Yng-Lang
4F, No. 126 Chiaochung 1 Street
Panchiao City Taipei Hsien (TW)

(72) Inventor: Lin, Yng-Lang
4F, No. 126 Chiaochung 1 Street
Panchiao City Taipei Hsien (TW)

(74) Representative: Thomson, Roger Bruce et al
POLLAK MERCER & TENCH High Holborn House 52-54
High Holborn
London WC1V 6RY (GB)

(54) Vehicle wheel assembly with means for maintaining motion in case of deflation.

(57) A vehicle wheel assembly comprises a pneumatically tyred wheel (11, 12) and an auxiliary wheel (1, 3, 5) secured coaxially to the pneumatically tyred wheel on the outside thereof. The auxiliary wheel comprises a solid ring (1) of rubber or other material having an external diameter less than that of the pneumatic tyre (11) when the latter is normally inflated, whereby when the pneumatic tyre is normally inflated the auxiliary wheel is out of contact with the ground but when the tyre (11) deflates the auxiliary wheel comes into contact with the ground. The auxiliary wheel ring (1) is mounted on a circular or annular central support (3, 4, 5, 6) which is preferably of two-part form and which is secured to the pneumatically tyred wheel.

FIG. 4

Bundesdruckerei Berlin

## Description

### VEHICLE WHEEL ASSEMBLY WITH MEANS FOR MAINTAINING MOTION IN CASE OF DEFLATION

This invention relates to a vehicle wheel assembly with means for maintaining motion in case of deflation. The invention is particularly concerned with an auxiliary wheel which is arranged to be fixed to the side of a pneumatically tyred wheel so that if the pneumatically tyred wheel is punctured or deflates for any other reason then the auxiliary wheel will enable the vehicle to continue its travel. The invention is particularly appropriate for the wheels of motor cars.

Many car accidents and traffic jams are caused by punctures or the deflation of a pneumatic tyre for other reasons. It is therefore an object of the present invention to provide a novel vehicle wheel assembly which incorporates an auxiliary wheel and which overcomes the aforesaid problems.

It is an object of the present invention to provide a vehicle wheel assembly for a motor car which incorporates an auxiliary wheel which is such that as soon as a tyre is punctured or deflates beyond a predetermined limit then the auxiliary wheel will act as an immediate replacement for the deflated tyre so that the car can maintain its motion.

In accordance with the present invention there is provided a vehicle wheel assembly comprising a pneumatically tyred wheel, and an auxiliary wheel secured coaxially to the pneumatically tyred wheel and having a diameter less than that of the tyre when the latter is normally inflated, whereby when the tyre is normally inflated the auxiliary wheel is out of contact with the ground but when the tyre deflates the auxiliary wheel is enabled to make rolling contact with the ground.

Preferably, the auxiliary wheel is positioned on the outside of the pneumatically tyred wheel.

Preferably, the auxiliary wheel comprises a solid ring, for example of rubber, fitted to a circular or annular support.

In one preferred embodiment of the invention, the auxiliary wheel comprises a central support defining a generally U-shaped peripheral channel and comprising on the one hand a ring having a radially outwardly projecting flange at the outer face thereof and on the other hand a plate having one face in contact with the inner face of the ring.

In order that the invention may be fully understood, embodiments of vehicle wheel assembly in accordance with the invention will now be described by way of example and with reference to the accompanying drawings, in which:

Fig. 1 is a side view of a first embodiment of auxiliary wheel for a wheel assembly in accordance with the invention;

Fig. 2 shows one component of the auxiliary wheel of Fig. 1;

Fig. 3 shows another component of the auxiliary wheel of Fig. 2;

Fig. 4 is a sectional view through a vehicle wheel assembly in accordance with the invention incorporating the auxiliary wheel shown in Figs. 1 to 3;

Fig. 5 is a view of a pneumatically tyred wheel with a rim modified to accept the auxiliary wheel of the present invention;

Fig. 6 shows an annular washer-type plate for use with the pneumatically tyred wheel of Fig. 5 as a replacement for the plate shown in Fig. 3; and

Fig. 7 is a sectional view through an alternative construction of auxiliary wheel.

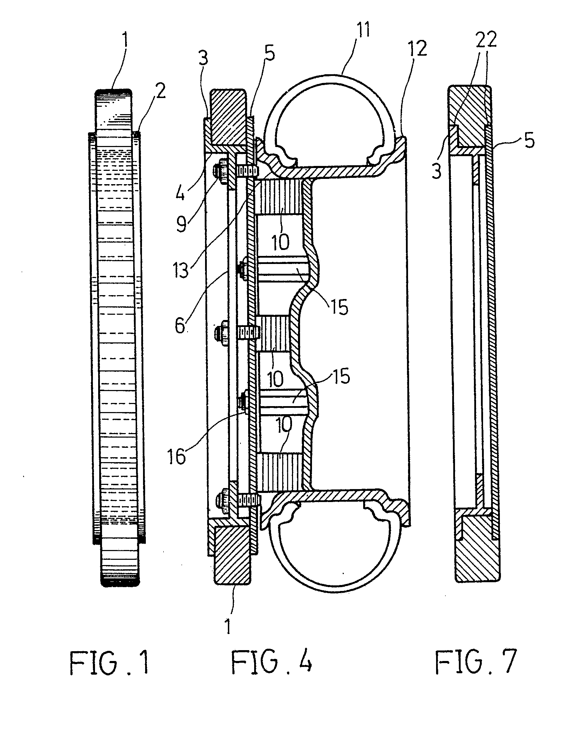

Referring first to Figs. 1 to 4 of the drawings, there is shown a vehicle wheel assembly in accordance with the invention. This comprises an auxiliary wheel fixedly secured to the outside of a pneumatically tyred wheel comprising a tyre 11 mounted on a wheel rim 12 which has a stepped configuration indicated at 13.

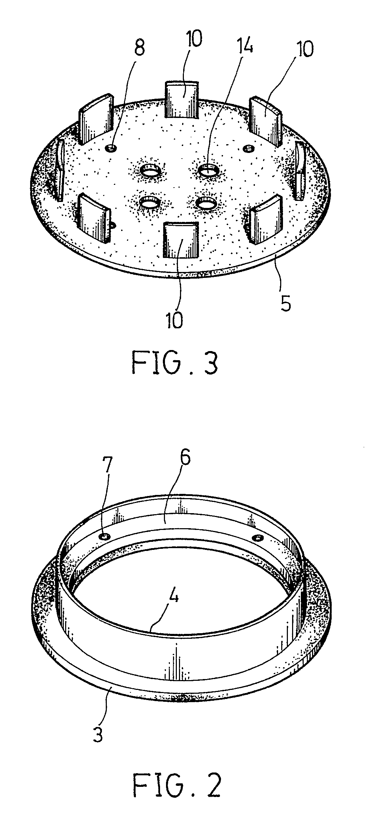

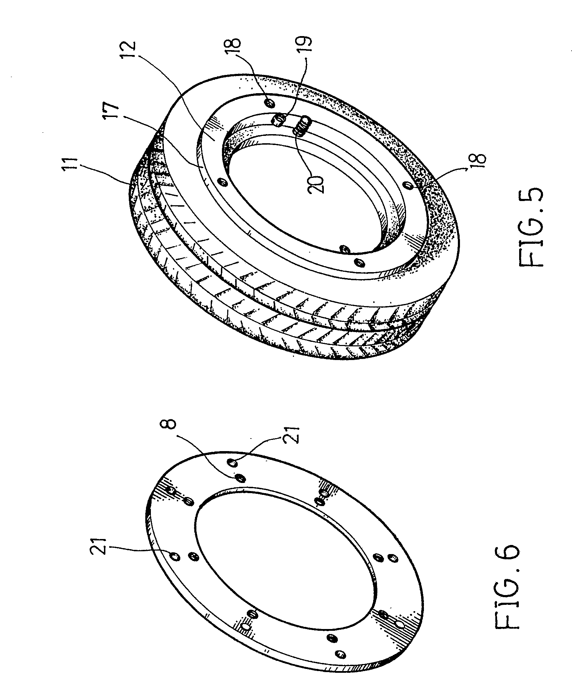

The auxiliary wheel comprises a solid ring 1 of rubber or any other material which will generate low vibration in use and which may have a degree of flexibility, the ring being mounted on a central support 2. The central support 2 defines a generally U-shaped peripheral channel and comprises the two components shown in Figs. 2 and 3 fastened together in face-to-face contact. The ring 1 is mounted within the peripheral channel of the central support 2. The central support 2 comprises a first component, shown in Fig. 2, and consisting of a support ring 4 which, in use, is coaxial with respect to the wheel rim 12, and which has a radially outwardly extending flange 3 on its axially outer face. The support ring 4 is provided with a radially inwardly projecting reinforcing flange 6 which is provided with holes 7 therethrough at spaced intervals around the circumference. The reinforcing flange 6 serves to increase the strength of the auxiliary wheel when it is subjected to pressure in use. The second component of the central support 2 is shown in Fig. 3 and comprises a flat circular plate 5 which is provided on one face with a plurality of equally spaced arcuate lugs 10 which, as shown in Fig. 4, are shaped and positioned to fit within the stepped portion 13 of the wheel rim 12 to locate and support the auxiliary wheel on the wheel rim. The circular plate 5 is also provided with threaded holes 8 therethrough which, when the central support 2 is assembled, are in alignment with the holes 7 in the reinforcing flange 6. The two component parts of the central support 2 are secured together by screws or bolts 9 which are fitted through the holes 7 and 8 and which, when tightened, draw the two components into face-to-face contact and wedge the ring 1 in the U-shaped peripheral channel.

The circular plate 5 is also provided with four further holes 14 therethrough, towards the centre of the plate. The holes 14 are used to receive the means to fasten the auxiliary wheel to the pneumatically tyred wheel. Such fastening means can comprise special wheel bolts 15 which are replacements for the conventional wheel bolts and which are sufficiently long to project out through the holes 14 and the plate 5 so that wheel nuts 16 can be secured thereon. These wheel nuts 16, when tightened on to the bolts 15, firmly secure the auxiliary wheel to the pneumatically tyred wheel.

As will be appreciated, the outer diameter of the ring 1 of the auxiliary wheel is dimensioned so as to be less than the external diameter of the tyre 11 when normally inflated. However, if the tyre 11 is punctured or deflates to a pressure lower than a predetermined pressure, then the auxiliary wheel will make rolling contact with the ground and enable the vehicle to continue in motion.

As an alternative to using the relatively long replacement bolts 15, the configuration of the pneumatically tyred wheel could be modified and fitted for example with projecting, externally screw-threaded studs which are long enough to extend axially out through the holes 14 in the circular plate 5 to receive the wheel nuts 16 thereon. Various other methods of fastening the auxiliary wheel to the pneumatically tyred wheel may be envisaged within the scope of the present invention.

An alternative embodiment is illustrated in Figs. 5 and 6. In this embodiment the rim 1 2 of the pneumatically tyred wheel is provided with a thickened outer portion 17 which is provided with a plurality of equally spaced threaded holes 18, four such holes being shown in Fig. 5. Additionally or alternatively, further screw-threaded holes 19 may be provided in the wheel rim. Alternatively, externally threaded studs 20 may be provided on the inner portion of the wheel rim. In this embodiment the circular plate 5 of the first embodiment is replaced by the annular washer-type plate shown in Fig. 6. This annular plate is secured to the thickened portion of the wheel rim 12 by being provided with a plurality of holes 21 which are in alignment with the holes 18 or the holes 19 or the studs 20 of the wheel rim 12 so that the annular plate and wheel rim can be screwed or bolted together. As in Fig. 3, the annular plate shown in Fig. 6 is provided with circumferential holes 8 by means of which it is fastened to the ring component 3, 4 shown in Fig. 2.

Fig. 7 shows a modified form of the auxiliary wheel, which differs from that shown in Figs. 1 to 4 in that in this embodiment the rubber ring is provided with circumferential recesses 22 on its outer and inner faces around the internal peripheral margin. These recesses 22 accommodate the flange 3 and the peripheral portion of the circular plate 5 of the central support 2. This configuration enables the rubber ring to withstand greater pressure in use.

**Claims**

1. A vehicle wheel assembly comprising a pneumatically tyred wheel, and an auxiliary wheel secured coaxially to the pneumatically tyred wheel and having a diameter less than that of the tyre when the latter is normally inflated, whereby when the tyre is normally inflated the auxiliary wheel is out of contact with the ground but when the tyre deflates the auxiliary wheel is enabled to make rolling contact with the ground.

2. An assembly as claimed in claim 1 , characterised in that the auxiliary wheel is positioned on the outside of the pneumatically tyred wheel.

3. An assembly as claimed in claim 1 or 2, characterised in that the auxiliary wheel comprises a solid ring fitted to a circular or annular support.

4. An assembly as claimed in claim 3, characterised in that the support has a pair of radially outwardly projecting peripheral flanges between which the ring is fitted.

5. An assembly as claimed in claim 4, characterised in that the peripheral flanges are recessed into the body of the ring.

6. An assembly as claimed in any preceding claim, characterised in that the auxiliary wheel comprises a central support defining a generally U-shaped peripheral channel and comprising on the one hand a ring having a radially outwardly projecting flange at the outer face thereof and on the other hand a plate having one face in contact with the inner face of the ring.

7. An assembly as claimed in claim 6, characterised in that the ring is provided with a radially inwardly projecting strengthening flange.

8. An assembly as claimed in any preceding claim, characterised in that the auxiliary wheel has a central support provided with axially inwardly projecting locating and/or support means arranged to engage within the rim of the pneumatically tyred wheel.

9. An assembly as claimed in claim 6, characterised in that the auxiliary wheel is secured to the pneumatically tyred wheel by bolt or stud means extending through holes in the said plate.

10. An assembly as claimed in claim 6, characterised in that the central support plate is a flat annular plate and the auxiliary wheel is secured to the pneumatically tyred wheel by fastening means extending through said flat annular plate and secured to or projecting from a thickened portion of the rim of the pneumatically tyred wheel.

FIG. 7

FIG. 4

FIG. 1

8    10    14    10

10

5

FIG . 3

7    6

4

3

FIG . 2

FIG.5

FIG.6